# EUROPÄISCHE PATENTANMELDUNG

(11) **EP 1 569 318 A2**
(43) Veröffentlichungstag der Anmeldung: **31.08.2005**
(21) Anmeldenummer: 05003357.0
(22) Anmeldetag: 17.02.2005
(51) Int. Cl.: H02J 7/14

(54) **Verfahren zur Beschränkung des Laststroms im Bordnetz eines Kraftfahrzeugs**

(30) Priorität: 28.02.2004 DE 102004009830
(71) Anmelder: LuK Lamellen und Kupplungsbau Beteiligungs KG, 77815 Bühl (DE)
(72) Erfinder: Gerhart, Jürgen, 77767 Appenweier (DE); Zimmermann, Martin, 77880 Sasbach (DE); Kro, Sven-Jostein, 77830 Bühlertal (DE)

(57) **Zusammenfassung**

Es wird ein Verfahren vorgeschlagen zur Beschränkung des Laststroms im Bordnetz eines Kraftfahrzeugs, der von mindestens zwei, ein Getriebe und/oder eine Kupplung eines Fahrzeugs betätigenden Elektromotoren beim Anfahr- und/oder Verfahrvorgang gezogen wird, nach dem der Laststrom auf einen vorbestimmten zulässigen Laststrom begrenzt wird und einem einzelnen Elektromotor in voller Höhe oder mehr als einem Elektromotor aufgeteilt gleichzeitig zugeführt wird.

## Beschreibung

Die vorliegende Erfindung betrifft ein Verfahren zur Beschränkung des Laststroms im Bordnetz eines Kraftfahrzeugs, der von mindestens zwei, einen Getriebe und/oder eine Kupplung eines Fahrzeugs betätigenden Elektromotoren beim Anfahr- und/oder Verfahrvorgang gezogen wird.

Aufgrund zunehmenden Einsatzes innovativer Getriebekonzepte in Kraftfahrzeugen mit einem größer werdenden Anteil an Automatisierung werden Getriebe und auch Kupplungen immer mehr automatisiert betätigt, wobei für den Schaft- und Wählvorgang und für das Betätigen der Kupplung auch Elektromotoren zum Einsatz kommen.

Da der Gangwechselvorgang zum Vorteil einer hohen Dynamik bei der Fahrt des Fahrzeugs in kurzer Zeit abgeschlossen sein soll, kommen zum Öffnen und/oder Schließen der Kupplung und zur Betätigung des Getriebes drehmomentstarke Elektromotoren zum Einsatz.

Es ist bekannt, dass Elektromotoren die Eigenschaft aufweisen, dass sie beim Anfahrvorgang für kurze Zeitdauer sehr hohe Ströme ziehen. Da die Elektromotoren mittels Steuergeräten angesteuert werden, belasten diese hohen Ströme selbstverständlich auch die Steuergeräte und insbesondere auch das Bordnetz des Fahrzeugs. Wenn nun ein Laststrom auftreten würde, der einen Spitzenwert im Bereich von etwa 60 bis 65 Ampere überschreitet, so würde diese unter anderem zu einem Flackern des Lichts des Fahrzeugs führen, was selbstredend unerwünscht ist, so dass ein solcher Laststromgrenzwert nicht überschritten werden darf.

Darüber hinaus ist klar, dass übermäßig hohe Ströme auch die im Bordnetz vorhandenen Sicherungseinrichtungen überlasten würden. In Abhängigkeit von der vom jeweiligen Elektromotor zu überwindenden Last können auch während der Verfahrvorgänge der Elektromotoren hohe Ströme auftreten und sich diese Ströme auch addieren, wenn mehrere Elektromotoren gleichzeitig einen Verfahrvorgang durchführen, wobei bei einem beispielsweise zu nennenden Doppelkupplungsgetriebe zwei Elektromotoren für die Betätigung der beiden Kupplungen und mindestens ein weiterer Elektromotor für die Durchführung des Wähl- und Schaltvorgangs vorhanden ist. Wenn nun berücksichtigt wird, dass auch während des Verfahrvorgangs der Elektromotoren Ströme im Bereich von 30 bis 40 Ampere auftreten können, so wird sehr schnell klar, dass der vorstehend genannte fahrzeugspezifisch zulässige Laststromspitzenwert überschritten werden kann.

Ausgehend hiervon liegt der vorliegenden Erfindung nunmehr die Aufgabe zugrunde, ein Verfahren zur Beschränkung des Laststroms im Bordnetz eines Kraftfahrzeuges zu schaffen, der von mindestens zwei, ein Getriebe und/oder eine Kupplung eines Fahrzeugs betätigenden Elektromotoren beim Anfahr- und/oder Verfahrvorgang gezogen wird.

Die Erfindung schafft nun zur Lösung dieser Aufgabe ein Verfahren zur Beschränkung des Laststroms im Bordnetz eines Kraftfahrzeugs, der von mindestens zwei, ein Getriebe und/oder eine Kupplung eines Fahrzeugs betätigenden Elektromotoren beim Anfahr- und/oder Verfahrvorgang gezogen wird, nach dem der Laststrom auf einen vorbestimmten zulässigen Laststrom begrenzt wird und einem einzelnen Motor in voller Höhe oder mehr als einem Motor aufgeteilt gleichzeitig zugeführt wird.

Damit wird mit anderen Worten erreicht, dass ein fahrzeugspezifischer Spitzenwert des Laststroms nicht überschritten wird und dieser zulässige Laststrom - beispielsweise in Abhängigkeit von der von einem bestimmten Elektromotor zu bewältigenden Last - einem einzelnen Elektromotor zugeführt wird oder der zulässige Laststrom auf mehr als einen Elektromotor aufgeteilt wird.

Dabei ist es nach der Erfindung vorgesehen, dass der Anfahrvorgang der Elektromotoren überwacht wird und der zulässige Laststrom dem ersten anfahrenden Elektromotor zugeführt wird und der Anfahr- und/oder Verfahrenvorgang anderer Elektromotoren gesperrt wird.

Es bedeutet dies mit anderen Worten, dass während des Anfahrens oder Verfahrens eines Elektromotors alle anderen Elektromotoren gesperrt werden können. Nach dieser Ausführungsform ist es also vorgesehen, dass der Elektromotor, der als erstes anfährt, den maximal zulässigen Laststrom erhält und wenn dann, beispielsweise mittels des Steuergeräts, festgestellt wird, dass der Motorstrom dieses Elektromotors wieder bis zu einem vorbestimmten Schwellenwert oder weitgehend auf Null zurückgegangen ist, ein anderer Elektromotor einen Anfahrvorgang durchführen kann und ihm dann zu diesem Zweck der zulässige Laststrom zugeführt wird.

Nach einer Weiterbildung der Erfindung ist es dabei vorgesehen, dass die einzelnen Elektromotoren anhand einer vorbestimmten Priorität angefahren und/oder verfahren werden, wobei ein Anfahr- und/oder Verfahrvorgang eines Elektromotors mit niedrigerer Priorität von einem Anfahr- und/oder Verfahrvorgang eines Elektromotors mit höherer Priorität unterbrochen werden kann. Nach dieser Ausführungsform kann eine Prioritätenliste vorgegeben werden, die beispielsweise festlegt, dass zunächst der Elektromotor zur Betätigung der ersten Kupplung einen Anfahr- oder Verfahrvorgang durchführt, während danach erst der Elektromotor zur Betätigung einer zweiten Kupplung bei einem Doppelkupplungsgetriebe einen entsprechenden Anfahr- oder Verfahrvorgang durchführen darf und erst daraufhin wieder der oder die Elektromotoren zur Betätigung des Getriebes. Nach dieser Ausführungsform ist es auch vorgesehen, dass der Anfahr- und/oder Verfahrvorgang eines Elektromotors mit in der Prioritätenliste niedrigerer Priorität unterbrochen werden kann, wenn - beispielsweise aufgrund der Fahrsituation des Fahrzeugs - ein Elektromotor mit höherer Priorität in der Prioritätenliste angefahren oder verfahren werden soll. Es ist auch möglich, die Prioritätenliste weiter zu unterteilen derart, dass eine erste Prioritätenliste für einen Anfahrvorgang der einzelnen Motoren vorgegeben wird und eine zweite Prioritätenliste für den Verfahrvorgang der einzelnen Elektromotoren.

Nach einer Weiterbildung des erfindungsgemäßen Verfahrens ist vorgesehen, dass während des Anfahr- und/oder Verfahrvorgangs in unterschiedlichen Zeitabschnitte der zulässige Laststrom unterschiedlichen Elektromotoren zugeführt wird. Damit ist es möglich, die Anfahr-und/oder Verfahrvorgänge verschiedener Elektromotoren nach einem Multiplexverfahren zu gestalten. Wenn beispielsweise zwei Elektromotoren weitgehend gleichzeitig verfahren oder angefahren werden soll, so ist es nach dieser Ausführungsform vorgesehen, dass zunächst für einen ersten Zeitabschnitt einem Elektromotor der zulässige Laststrom zugeführt wird, die Zuführung des Laststroms kurzzeitig unterbrochen wird und während dieser Unterbrechung der zulässige Laststrom dem zweiten Elektromotor zugeführt wird. Es führt dies dazu, dass der Anfahr- und/oder Verfahrvorgang der beiden Elektromotoren zwar etwas verlängert wird, der Anfahr- und/oder Verfahrvorgang der Elektromotoren aber weitgehend gleichzeitig stattfinden kann, ohne aber die fahrzeugspezifisch vorgegebenen zulässigen Laststromspitzenwerte zu überschreiten. Nach einer Weiterbildung der Erfindung ist es vorgesehen, dass der vorbestimmte zulässige Laststrom nach einem vorbestimmten Verhältnis auf die Elektromotoren aufgeteilt und diesen gleichzeitig zugeführt wird. Damit wird erreicht, dass beispielsweise dann, wenn in Abhängigkeit der Fahrsituation des Fahrzeugs zuerst ein Elektromotor mit dem höchstzulässigen Laststrom bestromt wird und aufgrund der Fahrsituation des Fahrzeugs dann aber gleichzeitig zur Bestromung des ersten Elektromotors ein zweiter Elektromotor bestromt werden muss, beide Elektromotoren mit einem dann im Verhältnis 1 : 2 aufgeteilten höchst zulässigen Laststrom bestromt werden, so dass beide Elektromotoren gleichzeitig anfahren und/oder verfahren können.

Hierbei ist es nach der Erfindung vorgesehen, dass eine vorbestimmte Verteilung des maximal zulässigen Laststroms auf verschiedene Elektromotoren vorab bestimmt wird. So ist es beispielsweise möglich festzulegen, dass bei einem Doppelkupplungsgetriebe die zwei Elektromotoren, die die beiden Kupplungen betätigen, gleichzeitig mit etwa 40 % des maximal zulässigen Laststroms versorgt werden und ein, eine geringere Last bewältigender Getriebemotor mit weiteren 20 % des maximal zulässigen Laststroms.

Nach einer Weiterbildung des erfindungsgemäßen Verfahrens ist es aber auch vorgesehen, dass der vorbestimmte zulässige Laststrom in Abhängigkeit von der Fahrsituation des Fahrzeugs veränderbar ist und auf die Elektromotoren variabel aufgeteilt wird. Damit kann anstelle einer fest vorgegebenen Verteilung des Laststroms auf einzelne Elektromotoren auch eine variable Verteilung des Laststroms auf die Elektromotoren erfolgen und damit der jeweiligen Fahrsituation des Fahrzeugs Rechnung getragen werden. So ist es beispielsweise möglich, den vorstehend genannten drei Motoren während einer Zugrückschaltung Stromanteilswerte zuzuführen, die sich von den Stromanteilswerten bei einer Zughochschattung unterscheiden.

Darüber hinaus ist es nach einer Weiterbildung der Erfindung auch vorgesehen, dass der vorbestimmte zulässige Laststrom in unterschiedlichen Zeitabschnitten in unterschiedlicher Höhe auf die Elektromotoren aufgeteilt wird. Damit kann ähnlich dem vorstehend genannten Muftiplexverfahren der maximal zulässige Strom je nach dem jeweiligen Verhalten des Elektromotors in unterschiedlichen Zeitabschnitten unterschiedlich auf die jeweiligen Elektromotoren aufgeteilt werden und damit beispielsweise der vom jeweiligen Elektromotor in unterschiedlichen Zeitabschnitten zu bewältigenden Last Rechnung getragen werden, während die Summe der den einzelnen Elektromotoren in jedem einzelnen Zeitabschnitt zugeführten Ströme den höchstzulässigen Gesamtstromwert im Bordnetz des Kraftfahrzeugs nicht überschreitet.

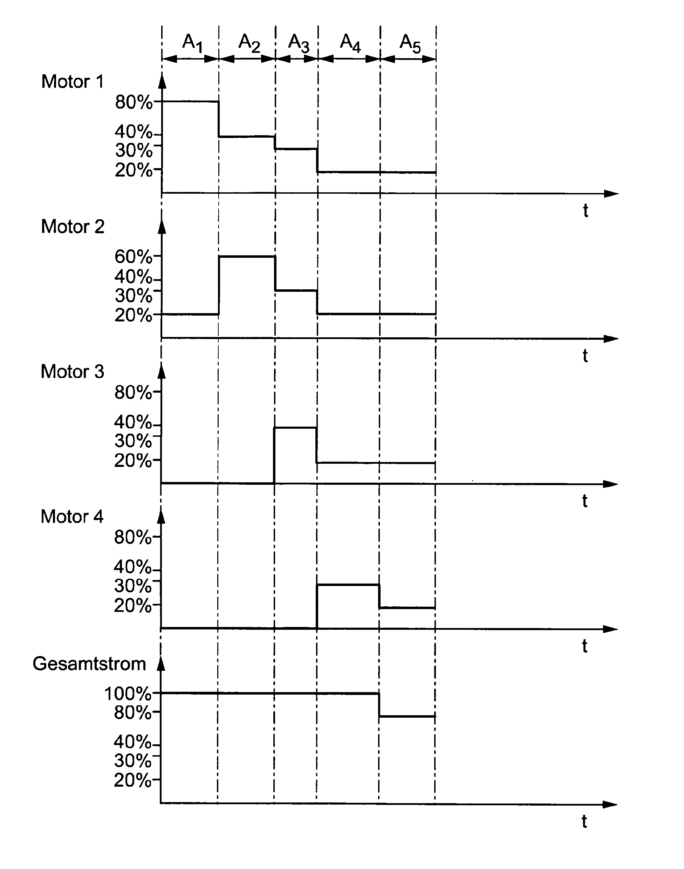

Die Erfindung wird im Folgenden anhand der Zeichnung näher erläutert, die in der einzigen Figur ein Strom/Zeitprofil nach einer Ausführungsform mit einem Multiplexansatz zeigt.

Die Darstellung zeigt für vier Elektromotoren den dem einzelnen Elektromotor während unterschiedlicher Zeitabstände zugeteilten Laststromanteil in Prozent aufgetragen über der Zeit.

Wie es ohne weiteres ersichtlich ist, wird während eines ersten Zeitabschnitts t₁ der Motor 1 mit 80 % des Gesamtstroms versorgt, während dieses Zeitraums t₁ der Motor 2 mit den verbliebenen 20 % des Gesamtstroms versorgt wird. Während dieses ersten Zeitabschnitts t₁ bleibt der Motor 3 und der Motor 4 unbestromt. Es kann dies beispielsweise dem Fall entsprechen, dass mit dem Motor 1 eine erste Kupplung eines Doppelkupplungsgetriebes betätigt wird und mit dem Motor 2 eine zweite Kupplung. Mit dem Motor 3 und dem Motor 4 können Gangwechsel auf den Teilgetrieben des Doppelkupplungsgetriebes durchgeführt werden.

In dem sich anschließenden Zeitabschnitt t₂ wird der die erste Kupplung des Doppelkupplungsgetriebes betätigende Motor 1 noch mit 40 % des Gesamtstroms versorgt, während dem Motor 2 jetzt 60 % des Gesamtstroms zugeführt werden.

In dem sich hieran anschließenden Zeitabschnitt t₃ wird dem ersten Motor 1 noch 30 % des Gesamtstroms, d.h. also des vorbestimmten zulässigen Laststroms im Bordnetz des Kraftfahrzeugs zugeführt, während der Motor 2 mit 30 % des höchst zulässigen Gesamtstroms versorgt wird und dem Motor 3 - beispielsweise zur Durchführung eines Gangwechselvorgangs - weitere 40 % des Gesamtstroms zugeführt werden.

Während des sich daran anschließenden Zeitabschnitts t₄ ist der dem Motor 1 zugeführte Strom auf 20 % des Gesamtstroms verringert worden, ein Wert, der sich ebenfalls für den dem Motor 2 zugeführten Strom ergibt. In diesem Zeitabschnitt wird der Motor 3 ebenfalls konstant mit 20 % des Gesamtstroms bestromt und der erstmals in diesem Zeitabschnitt bestromte Motor 4 mit 30 % des Gesamtstroms. In dem sich hieran anschließenden fünften Zeitabschnitt t₅ wird der Motor 1 weiterhin mit 20 % des zulässigen vorbestimmten Laststroms bestromt, wobei dieser Wert ebenfalls für den Motor 2 gilt. Der dem Motor 3 zugeführte Strom hat sich vom vierten Zeitabschnitt t₄ zum fünften Zeitabschnitt t₅ nicht verändert, so dass dem Motor 3 weiterhin 20 % des vorbestimmten zulässigen Gesamtstroms zugeführt wird, während in diesem Zeitabschnitt t₅ dem Motor 4 ebenfalls nur mehr 20 % des vorbestimmten zulässigen Laststroms zugeführt werden, so dass in diesem fünften Zeitabschnitt t₅ der Gesamtstrombedarf der vier Motoren auf 80 % des vorbestimmten zulässigen Laststroms zurückgegangen ist.

Dieses Ausführungsbeispiel macht deutlich, dass der Motor 1 und der Motor 2 gleichzeitig anfahren und/oder verfahren können, wobei in diesem Fall dem Motor 1 mehr Strom zugeführt wurde, als dem Motor 2, da dieser in diesem Fall eine höhere Last zu bewältigen hatte.

Obwohl während aller Zeitabschnitte t₁ bis t₅ der Motor 1 und der Motor 2 bestromt wurden, ist aufgrund der Vorgehensweise, in unterschiedlichen Zeitabschnitten den einzelnen Elektromotoren Laststrom in unterschiedlicher Höhe aufgeteilt zuzuführen keine Überschreitung des höchst zulässigen vorbestimmten Laststroms eingetreten.

Die Erfindung macht es daher möglich, den im Bordnetz eines Kraftfahrzeugs beispielsweise fahrzeugspezifisch zulässigen Laststrom einzuhalten und gleichzeitig den unterschiedlichen Lastanforderungen an die jeweiligen Elektromotoren Rechnung zu tragen. Damit wird der Charakteristik der zur Betätigung eines Getriebes und/oder einer Kupplung eines Fahrzeugs eingesetzten Elektromotoren, nämlich insbesondere beim Anfahren des jeweiligen Elektromotors einen hohen Strom zu ziehen, Rechnung getragen. Da aber auch während des Verfahrvorgangs der einzelnen Elektromotoren hohe Ströme auftreten können, die aufgrund der Addition der einzelnen Lastströme der Elektromotoren den im Bordnetz zulässigen vorbestimmten Laststrom überschreiten könnten, auch dieser Situation Rechnung getragen, so dass die Erfindung nicht nur für die Beschränkung des Laststroms im Bordnetz eines Kraftfahrzeugs beim Anfahrvorgang bestimmt ist, sondern auch für die entsprechende Beschränkung beim Verfahrenvorgang der einzelnen Motoren.

## Patentansprüche

1. Verfahren zur Beschränkung des Laststroms im Bordnetz eines Kraftfahrzeugs, der von mindestens zwei, ein Getriebe und/oder eine Kupplung eines Fahrzeugs betätigenden Elektromotoren beim Anfahr- und/oder Verfahrvorgang gezogen wird, **dadurch gekennzeichnet, dass** der Laststrom auf einen vorbestimmten zulässigen Laststrom begrenzt wird und einem einzelnen Elektromotor in voller Höhe oder mehr als einem Elektromotor aufgeteilt gleichzeitig zugeführt wird.

2. Verfahren nach Anspruch 1, **dadurch gekennzeichnet, dass** der Anfahr- und/oder Verfahrvorgang der Elektromotoren überwacht wird und der zulässige Laststrom dem ersten anfahrenden Motor zugeführt wird und der Anfahr- und/oder Verfahrvorgang anderer Elektromotoren gesperrt wird.

3. Verfahren nach Anspruch 1, **dadurch gekennzeichnet, dass** die einzelnen Elektromotoren anhand einer vorbestimmten Priorität angefahren und/oder verfahren werden, wobei ein Anfahr- und/oder Verfahrvorgang eines Elektromotors mit niedrigerer Priorität von einem Anfahr- und/oder Verfahrvorgang eines Elektromotors mit höherer Priorität unterbrechbar ist.

4. Verfahren nach Anspruch 3, **dadurch gekennzeichnet, dass** die Priorität in Abhängigkeit von der Fahrsituation des Fahrzeugs veränderbar ist.

5. Verfahren nach einem der Ansprüche 1 bis 4, **dadurch gekennzeichnet, dass** während des Anfahr- und/oder Verfahrvorgangs in unterschiedlichen Zeitabschnitten der zulässige Laststrom unterschiedlichen Elektromotoren zugeführt wird.

6. Verfahren nach Anspruch 1, **dadurch gekennzeichnet, dass** der vorbestimmte zulässige Laststrom nach einem vorbestimmten Verhältnis auf die Elektromotoren aufgeteilt wird.

7. Verfahren nach Anspruch 1, **dadurch gekennzeichnet, dass** der vorbestimmte zulässige Laststrom in Abhängigkeit von der Fahrsituation veränderbar auf die Elektromotoren aufgeteilt wird.

8. Verfahren nach Anspruch 1, **dadurch gekennzeichnet, dass** der vorbestimmte zulässige Laststrom in unterschiedlichen Zeitabschnitten in unterschiedlicher Höhe auf die Elektromotoren aufgeteilt wird.

9. Verfahren nach Anspruch 8, **dadurch gekennzeichnet, dass** der Laststrom in Abhängigkeit von der vom jeweiligen Elektromotor zu betätigenden Last auf die Elektromotoren aufgeteilt wird.
